(19)

Europäisches
Patentamt
European
Patent Office
Office européen
des brevets

(11) **EP 2 187 392 A1**

(12) **EUROPEAN PATENT APPLICATION**

(43) Date of publication:
**19.05.2010 Bulletin 2010/20**

(51) Int Cl.:
***G11B 7/135*** *(2006.01)*

(21) Application number: **08305811.5**

(22) Date of filing: **18.11.2008**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(71) Applicant: **Thomson Licensing
92443 Issy-les-Moulineaux Cedex (FR)**

(72) Inventors:
• **Knittel, Joachim
78532, Tuttlingen (DE)**
• **Richter, Hartmut
78052, Villingen-Schwenningen (DE)**

(74) Representative: **Schmidt-Uhlig, Thomas
Deutsche Thomson OHG
European Patent Operations
Karl-Wiechert-Allee 74
30625 Hannover (DE)**

(54) **Apparatus for writing to an optical recording medium**

(57)     The present invention relates to an apparatus (19) for writing to an optical recording medium (7) intended to be read at a first wavelength, which uses a light beam (2) of a second wavelength for writing and is based on an apparatus for writing to an optical recording medium intended to be read at the second wavelength. The invention further relates to an optical compensation element (12) and an optical pickup for use in such an apparatus.

According to the invention, an optical compensation element (12) is provided for use in an optical pickup for recording on an optical recording medium (7) intended to be read with a light beam (2') at a first wavelength and with a first numerical aperture, which result in a first spot size of the light beam (2') on the optical recording medium (7), the optical pickup having a light source (1) for generating a light beam (2) at a second wavelength and an objective lens (6) with a second numerical aperture different from said first numerical aperture. The optical compensation element (12) adapts a spot size of the light beam (2) on the optical recording medium (7) to said first spot size.

**Fig. 3**

EP 2 187 392 A1

**Description**

The present invention relates to an apparatus for writing to an optical recording medium intended to be read at a first wavelength, which uses a light beam of a second wavelength for writing and is based on an apparatus for writing to an optical recording medium intended to be read at the second wavelength. The invention further relates to an optical compensation element and an optical pickup for use in such an apparatus.

The distribution of digital data such as movies or software on optical recording media today is established as the main distribution channel. However, this means that stores need to stock a large amount of titles in order to be able to provide most requested titles immediately to their customers without having to order them.

In order to reduce this need for a large stock several solutions for a manufacturing on demand or a distribution via networks have been proposed. The optical recording medium, typically a DVD (digital versatile disk), is recorded as soon as a title is requested by a customer. Recording is done with a special recorder provided in a store, with a kiosk type recording terminal, or by a special consumer recorder connected to a network. These special recorders allow to write data to a recordable DVD in such a way that the DVD has the appearance of a CSS-encrypted DVD-Video (ROM) disk, even though it is a specially finalized recordable DVD. For recording the optical recording medium has a groove structure to guide an optical pickup unit relative to the optical recording medium.

In order to establish the above described solutions as further distribution channels, the recorded optical recording media have to be compatible with as many standard players and recorders as possible. While this is usually not a problem for players, the situation is different with recorders. As a copy protection mechanism some optical pickups used in recorders do not allow to retrieve data from an optical recording medium indicated as a read-only medium when a push-pull signal originating from the groove structure is found, which is an indication of a recordable optical recording medium. Such incompatibilities have to be avoided.

Recently a format for a recordable optical recording medium, which has the appearance of a read-only optical recording medium for most players and recorders, has been proposed. EP 1 933 313 discloses an optical recording medium with a recording layer sensitive for recording at a first wavelength and sensitive for reading at a second wavelength, the recording layer having a groove structure, wherein at the first wavelength the groove structure has a diffraction efficiency into a first diffraction order sufficiently large to generate a push-pull signal, and at the second wavelength it has a diffraction efficiency into a first diffraction order close to zero. The optical recording medium is recorded with a laser system of a first wavelength, namely 405nm, and intended to be read at a second wavelength, namely 650nm. In this document an objective lens with a numerical aperture (NA) at or below 0.65 is used during recording, which is available in HD-DVD recorders. The disk format is known as DVD downloadable.

However, in the meantime HD-DVD recorders are no longer manufactured. Therefore it would be cost effective to have a simple method to convert a standard, mass-produced, commercial BluRay recorder into a recorder for the above mentioned application. The manufacturing on demand business focuses on kiosks, retail shops and online-shops. Therefore, the recorder will mainly be used for this specific application. However, since the drive will be used commercially and the drive volume is expected to be small compared with consumer drives, the hardware changes need to be reduced to a minimum, i.e. no specific objective lens shall be used. This allows to avoid a complicated alignment process of the optical system. Only modifications of the firmware will be needed. These are, however, much less expensive and would be required anyway.

It is an object of the invention to propose a solution for writing to an optical recording medium intended to be read at a first wavelength with a light beam of a second wavelength, which is based on an apparatus for writing to an optical recording medium intended to be read at the second wavelength.

According to the invention, this object is achieved by an optical compensation element for an optical pickup for recording on an optical recording medium intended to be read with a light beam at a first wavelength and with a first numerical aperture, which result in a first spot size of the light beam on the optical recording medium, the optical pickup having a light source for generating a light beam at a second wavelength and an objective lens with a second numerical aperture different from said first numerical aperture, wherein the optical compensation element adapts a spot size of the light beam on the optical recording medium to said first spot size.

The optical compensation element allows to easily and inexpensively adapt a standard recorder using the second wavelength to a type of disk intended to be read at a first wavelength. In contrast to simply use an adapted objective lens, which requires a complete re-calibration of the optical pickup, the use of an optical compensation element does not require additional adjustments of the optical pickup. For example, a DVD downloadable as described above is intended to be read at a wavelength of around 650nm with a numerical aperture around 0.65. A wavelength of around 405nm is needed for recording. In order to adapt a normal recorder using a wavelength of 405nm and a numerical aperture of 0.85 for recording, e.g. a BluRay Disk recorder, to this type of disk, the optical compensation element is arranged in the beam path. One purpose of the optical compensation element is to increase the spot size of the focused light beam on the disk to a size necessary for recording DVD-like marks. For this the optical compensation element reduces the numerical aperture to around or below 0.7.

Advantageously, the optical compensation element further compensates for a difference between a first thickness of a cover layer of the optical recording medium and a second thickness of a cover layer to which the objective lens is adapted. The cover layer thickness of a DVD downloadable is identical to the cover layer thickness of a DVD, i.e. around 600μm. However, the cover layer thickness of a BluRay Disk, to which the objective lens of a BluRay recorder is adapted, is around 100μm. Compensating for this difference in thickness is useful for reducing aberrations of the light beam, which could otherwise influence the recording quality.

Advantageously, the optical compensation element maintains the wavefront aberration in the focus around or below 70mLambda. On the one hand this ensures that push-pull tracking can be reliably performed. On the other hand, this allows to a certain alignment tolerance of the optical compensation element relative to the objective lens.

The optical compensation element is advantageously fixed to the front of the objective lens of a standard recorder using the second wavelength. For this purpose the surface that is directed to the objective lens fits on the objective lens. The second surface is an asphere that compensates for most of the remaining aberrations. In case the surface data ob the objective lens is not available from the lens manufacturer, it can be determined using a profilometer or the like. The optical compensation element is preferably glued onto the objective lens with UV curable glue, which advantageously has the same or a at least a similar refractive index as the the objective lens. The alignment is favorably done with the help of mechanical alignment references that are part of the objective lens, e.g. a plastic frame, which is typically molded with a plastic objective lens and which increases the mechanical stability, eases handling during the manufacturing of the pickup and protects the objective lens against crashes with the disk. Alternatively, self-alignment forces induced by surface tension are used. The optical compensation element floats on the glue and tries to match the shape of the objective lens. The self-alignment is improved if the contacting surfaces of the objective lens and the optical compensation element do not fully match, but if the gap between both surface increases from the center to the edge or vice-versa, depending on the properties of the glue. In both cases the optical compensation element is fixed after alignment by UV irradiation. Of course, also other types of adhesive can be used for fixing the optical compensation element to the objective lens. In addition it is likewise possible to provide an independent holder for the optical compensation element instead of fixing it to the objective lens.

Favorably, the optical compensation element has the same refractive index and/or the same material as the objective lens. This has the advantage that no thermal strain occurs in case the optical compensation element is directly fixed to the objective lens. In addition, unwanted reflections are reduced. Of course, it is likewise feasible to use a different material for the optical compensation element.

For a better understanding the invention shall now be explained in more detail in the following description with reference to the figures. It is understood that the invention is not limited to this exemplary embodiment and that specified features can also expediently be combined and/or modified without departing from the scope of the present invention. In the figures:

Fig. 1    illustrates a known apparatus for reading from an optical recording medium,

Fig. 2    shows an apparatus according to the invention for writing to an optical recording medium,

Fig. 3    depicts a particular design of an optical compensation element according to the invention,

Fig. 4    shows the wavefront aberration along the X-axis in the focus for a 5μm lateral decenter of the optical compensation element of Fig. 3,

Fig. 5    shows the wavefront aberration along the Y-axis in the focus for a 5μm lateral decenter of the optical compensation element of Fig. 3,

In the following the invention is explained with reference to a DVD-like optical recording medium, which is read with a wavelength around 650nm and recorded at a wavelength around 405nm. Of course, the general idea of the invention is also applicable to other types of optical recording media.

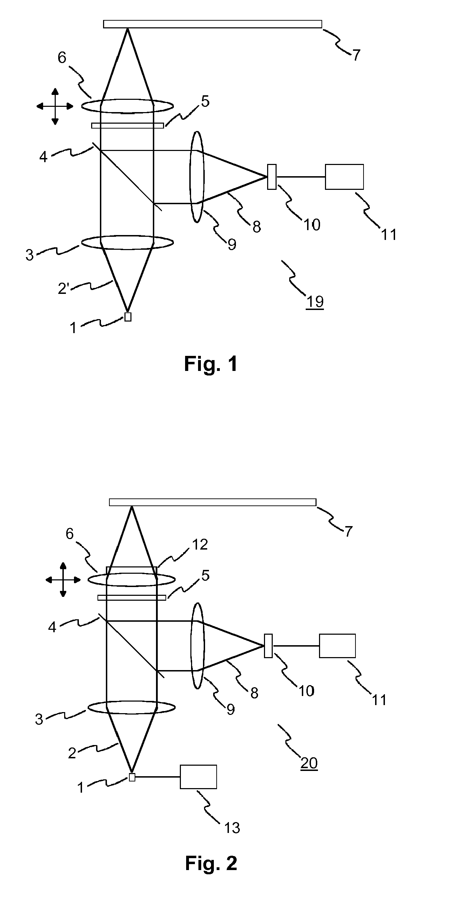

A known apparatus 19 for reading data from an optical recording medium 7 is schematically illustrated in Fig. 1. A laser diode 1 emits a linearly polarized light beam 2', which is collimated by a collimator lens 3. The collimated light beam 2' passes a polarization beam splitter 4 and a quarter wave plate 5, which transforms the light beam 2' into a circular polarized light beam 2', before it is focused onto the optical recording medium 7 by an objective lens 6. The light beam 8 reflected by the optical recording medium 7 is collimated by the objective lens 6 and passes the quarter wave plate 5, which transforms the reflected light beam 8 into a linear polarized light beam 8. Due to the quarter wave plate 5, the direction of polarization of the reflected light beam 8 is perpendicular to the direction of polarization of the initial light beam 2'. The reflected light beam 8 is thus deflected by the polarization beam splitter 4 towards a focusing lens 9, which focuses the reflected light beam 8 onto a detector 10. An evaluation circuitry 11 evaluates the signals obtained by the detector 10 to obtain the data signal recorded on the optical recording medium 7. In case the optical recording medium is a DVD, the light beam 2' has a wavelength of 650nm. In addition, the objective lens 6 has a numerical aperture of 0.65.

An apparatus 20 according to the invention for writing to an optical recording medium 7 is schematically shown in Fig. 2. The apparatus 20 largely corresponds to the apparatus 19 of Fig. 1. A controller 13 controls the laser diode 1 for writing data to the optical recording medium 7. Of course, the complete reading path is optional and not needed for an apparatus for writing only. However, usually such an apparatus is also capable of reading from an optical recording medium 7. The apparatus 20 is based on an apparatus for writing to a BluRay Disc and thus uses a wavelength of 405nm. The objective lens 6 has a numerical aperture of 85. In order to adapt the apparatus 20 to an optical recording medium intended to be read at a higher wavelength, namely 650nm, an optical compensation element 12 is provided on the objective lens 6. The optical compensation element 12 is preferably made of the same material as the objective lens 6, e.g. plastic, or has at least the same refractive index. The thickness of the optical compensation element 12 is about 160$\mu$m. The surface that is directed to the lens fits exactly on the objective lens 6. The second surface is an asphere that compensates most of the remaining aberrations. The element is preferably glued onto the objective lens 6 with a UV curable glue. The alignment is advantageously done either with the help of mechanical alignment references, which are part of the objective lens, or by using self-alignment forces induced by surface tension. The optical compensation element 12 floats on the glue and tries to match the shape of the objective lens 6. An example of a mechanical alignment reference is a plastic frame, which is typically molded with the plastic objective lens 6 and which increases the mechanical stability, eases handling during the manufacturing of the pickup and protects the objective lens 6 against crashes with the optical recording medium 7. After alignment the optical compensation element 12 is fixed by UV irradiation.

The optical compensation element fulfills a plurality of purposes. Firstly, it changes the cover layer thickness compensation of the objective lens from 100$\mu$m (BluRay Disc) to 600$\mu$m (DVD). Secondly, it reduces the NA from 0.85 to about 0.7 to increase the size of the light spot on the optical recording medium 7. Thirdly, it keeps the wavefront aberration around or below 70m$\lambda$ to allow reliable push-pull tracking.

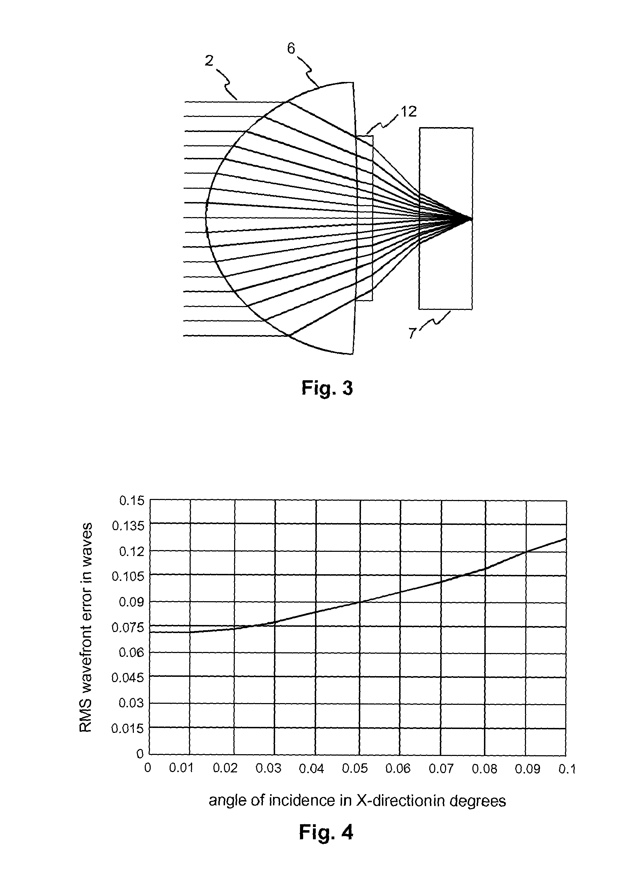

A particular design of the optical compensation element 12 fixed to the objective lens 6 is illustrated in Fig. 3. An exemplary prescription of the particular design is given below in Table 1. The values were obtained using the ZEMAX simulation software.

Table 1

| Surf | Type | Radius | Thickness | Glass | Diameter | Conic |
|---|---|---|---|---|---|---|
| 0 (OBJ) | STANDARD | Infinity | Infinity | | 0 | 0 |
| 1 (STO) | STANDARD | Infinity | 0 | | 2.6 | 0 |
| 2 | STANDARD | Infinity | 0 | | 2.6 | 0 |
| 3 | EVENASPH | 1.560384 | 1.7 | 1.56 | 3 | 0 |
| 4 | EVENASPH | Infinity | 0.1581576 | 1.56 | 1.836852 | 0 |
| 5 | EVENASPH | Infinity | 0 | | 1.618246 | 0 |
| 6 | STANDARD | Infinity | 0.5232314 | | 1.639197 | 0 |
| 7 | STANDARD | Infinity | 0.6 | POLYCARB | 2 | 0 |
| 8 (IMA) | STANDARD | Infinity | 0.0224753 | 0 | | |

Rotationally symmetric polynomial aspheric surfaces are described by a polynomial expansion of the deviation from a spherical (or aspheric described by a conic) surface. The even asphere surface model uses only the even powers of the radial coordinate to describe the asphericity. The model uses the base radius of curvature R and the conic constant k. The surface sag is given by

$$z(r)=\frac{cr^2}{1+\sqrt{1-(1+k)c^2r^2}}+\alpha_1 r^2+\alpha_2 r^4+\alpha_3 r^6+\alpha_4 r^8+\alpha_5 r^{10},$$

with $c=1/R$.

The aspheric coefficients for the prescription of Table 1 are summarized in Table 2.

Table 2

| Surf | $\alpha_1$ | $\alpha_2$ | $\alpha_3$ | $\alpha_4$ | $\alpha_5$ |
|------|-----------|-------------|--------------|--------------|--------------|
| 3 | 0.1231472 | 0.007371818 2 | 0.001039900 9 | -0.0019923907 | 0.0009044519 5 |
| 4 | -0.10999747 | 0.08959518 | -0.024310023 | 0.0035225255 | 0 |
| 5 | 0.07348488 9 | -0.25771221 | 0.3919778 | -0.20338808 | 0 |

In the above Table 1, the first column (Surf) indicates the number of the surface considered for the optimization. #0 (OBJ) is the object surface, #8 (IMA) is the image surface for Table 1. (STO) indicates a STOP surface. The second column indicates the type of the surface, namely Standard (spherical or plane), or Aspherical. The third column contains the radius of curvature of the given surface. Indicated in column 4 is the thickness (distance) in mm between the two surfaces of lines (n) and (n+1). The 5th column contains the name of the material of the objects, or in case no name is given, the refractive index. The diameter in mm of the surface under consideration is given in column 6. Of course, this diameter represents only the minimum necessary diameter. Finally, the 7th column shows the conical constants of the aspherical surfaces.

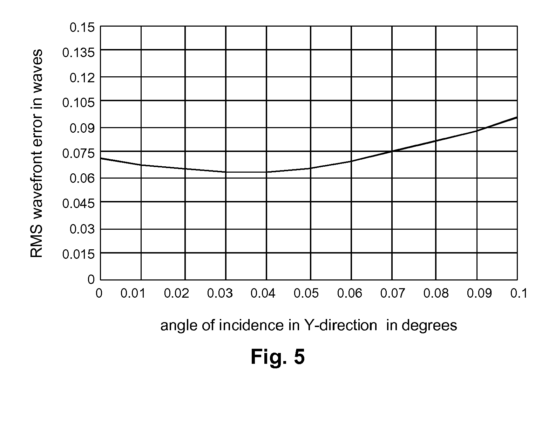

Figs. 4 and 5 show a simulation of the wavefront aberration in the focus for a $5\mu$m lateral decenter of the optical compensation element 12 shown in Fig. 3. The resulting wavefront aberration is drawn against the angle of incidence of the light beam 2 on the objective lens 6 with regard to the X-axis and the Y-axis, respectively. In other words, for the simulation the optical compensation element 12 was shifted $5\mu$m along the Y-axis of the objective lens 6. Then the wavefront aberration was determined for different angles of incidence of the light beam 2 on the objective lens 6. For a BluRay Disk, the maximum admissible angle of incidence is about 0.3°. Therefore, the lateral alignment tolerance of the optical compensation element 12 is about $\pm 5\mu$m.

**Claims**

1.  Optical compensation element (12) for use in an optical pickup for recording on an optical recording medium (7) intended to be read with a light beam (2') at a first wavelength and with a first numerical aperture, which result in a first spot size of the light beam (2') on the optical recording medium (7), the optical pickup having a light source (1) for generating a light beam (2) at a second wavelength and an objective lens (6) with a second numerical aperture different from said first numerical aperture, **characterized in that** the optical compensation element (12) adapts a spot size of the light beam (2) on the optical recording medium (7) to said first spot size.

2.  Optical compensation element (12) according to claim 1, **wherein** the optical compensation element (12) further compensates for a difference between a first thickness of a cover layer of the optical recording medium (7) and a second thickness of a cover layer to which the objective lens (6) is adapted.

3.  Optical compensation element (12) according to one of claims 1 or 2, **wherein** the first thickness of the cover layer is around $600\mu$m and the second thickness of the cover layer is around $100\mu$m.

4.  Optical compensation element (12) according to one of claims 1 to 3, **wherein** the first wavelength is around 650nm and/or the second wavelength is around 405nm.

5.  Optical compensation element (12) according to one of claims 1 to 4, **wherein** the first numerical aperture is around 0.65 and/or the second numerical aperture is around 0.85.

6.  Optical compensation element (12) according to one of claims 1 to 5, **wherein** the optical compensation element (12) reduces the second numerical aperture to around 0.7.

7.  Optical compensation element (12) according to one of claims 1 to 6, **wherein** the optical compensation element (12) maintains the wavefront aberration in the focus around or below 70mLambda.

8.  Optical compensation element (12) according to one of the preceding claims, **wherein** the optical compensation element (12) has the same refractive index and/or the same material as the objective lens(6).

9. Optical pickup for recording on an optical recording medium (7) intended to be read with a light beam (2') at a first wavelength and with a first numerical aperture, which result in a first spot size of the light beam (2') on the optical recording medium (7), having a light source (1) for generating a light beam (2) at a second wavelength different from said first wavelength and an objective lens (6) with a second numerical aperture different from said first numerical aperture, **characterized in that** the optical pickup has an optical compensation element (12) according to one of claims 1 to 8 for adapting a spot size of the light beam (2) on the optical recording medium (7) to said first spot size.

10. Optical pickup according to claim 9, **wherein** the optical compensation element (12) is glued to the objective lens (6).

11. Apparatus (20) for writing to an optical recording medium (7) intended to be read at a first wavelength, **characterized in that** it has an optical pickup according to one of claims 9 or 10 for writing to the optical recording medium (7) with a second wavelength different from said first wavelength.

12. Apparatus (20) according to claim 11, **wherein** the apparatus (20) is a BluRay Disk recorder adapted for recording on a DVD downloadable.

**Fig. 1**

**Fig. 2**

**Fig. 3**

angle of incidence in X-direction in degrees

**Fig. 4**

**Fig. 5**

Europäisches
Patentamt

European
Patent Office

Office européen
des brevets

# EUROPEAN SEARCH REPORT

**Application Number**

EP 08 30 5811

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2008/136315 A (RICOH KK [JP]; HAMANO YUKIKO [JP]; HIRAI HIDEAKI [JP]; NASUKAWA TOSHIM) 13 November 2008 (2008-11-13) * page 14, line 18 - page 30, line 17; figures 1-7 * | 1-12 | INV. G11B7/135 |
| X | EP 1 744 311 A (TOSHIBA SAMSUNG STORAGE TECH [JP]) 17 January 2007 (2007-01-17) * paragraph [0013] - paragraph [0038]; figures 1-5 * | 1-12 | |
| X | US 2007/182915 A1 (OSAWA MITSUO [JP] ET AL) 9 August 2007 (2007-08-09) * paragraph [0096] - paragraph [0108]; figure 7 * | 1-12 | |
| A | US 2005/265150 A1 (HIRAYAMA HIROSHI [JP] ET AL) 1 December 2005 (2005-12-01) * paragraph [0175] - paragraph [0186]; figure 17 * | 1-12 | |
| A | EP 1 968 049 A (SAMSUNG ELECTRONICS CO LTD [KR]) 10 September 2008 (2008-09-10) * the whole document * | 1-12 | **TECHNICAL FIELDS SEARCHED (IPC)** G11B |
| A | JP 2006 164331 A (VICTOR COMPANY OF JAPAN) 22 June 2006 (2006-06-22) * paragraph [0033] - paragraph [0092]; figures 1-6 * | 1-12 | |
| D,A | EP 1 933 313 A (THOMSON LICENSING [FR]) 18 June 2008 (2008-06-18) * the whole document * | 1-12 | |

The present search report has been drawn up for all claims

| Place of search | Date of completion of the search | Examiner |
|---|---|---|
| The Hague | 27 February 2009 | Lefèbvre, Stéphane |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 08 30 5811

This annex lists the patent family members relating to the patent documents cited in the above-mentioned European search report.
The members are as contained in the European Patent Office EDP file on
The European Patent Office is in no way liable for these particulars which are merely given for the purpose of information.

27-02-2009

| Patent document cited in search report | | Publication date | Patent family member(s) | | Publication date |
|---|---|---|---|---|---|
| WO 2008136315 | A | 13-11-2008 | NONE | | |
| EP 1744311 | A | 17-01-2007 | CN | 1897130 A | 17-01-2007 |
| | | | CN | 101231856 A | 30-07-2008 |
| | | | CN | 101231857 A | 30-07-2008 |
| | | | EP | 1975933 A1 | 01-10-2008 |
| | | | JP | 2007026540 A | 01-02-2007 |
| | | | US | 2007014222 A1 | 18-01-2007 |
| US 2007182915 | A1 | 09-08-2007 | CN | 101040336 A | 19-09-2007 |
| | | | WO | 2006043516 A1 | 27-04-2006 |
| | | | KR | 20070065317 A | 22-06-2007 |
| US 2005265150 | A1 | 01-12-2005 | JP | 2006012371 A | 12-01-2006 |
| EP 1968049 | A | 10-09-2008 | CN | 101261866 A | 10-09-2008 |
| | | | KR | 20080082387 A | 11-09-2008 |
| | | | US | 2008219127 A1 | 11-09-2008 |
| JP 2006164331 | A | 22-06-2006 | NONE | | |
| EP 1933313 | A | 18-06-2008 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1933313 A